# FASCICULE DE BREVET EUROPEEN

(11) **EP 4 017 804 B1**
(45) Date de publication et mention de la délivrance du brevet: **03.04.2024**
(21) Numéro de dépôt: 20757335.3
(22) Date de dépôt: 18.08.2020
(51) Int. Cl.: B64D 11/06

(54) **AGENCEMENT DE SIÈGES PASSAGERS, NOTAMMENT POUR AÉRONEFS**
ANORDNUNG VON PASSAGIERSITZEN, INSBESONDERE FÜR FLUGZEUGE
ARRANGEMENT OF PASSENGER SEATS, IN PARTICULAR FOR AIRCRAFT

(30) Priorité: 19.08.2019 FR 1909278
(43) Date de publication de la demande: 29.06.2022
(73) Titulaire: Safran Seats, 78370 Plaisir (FR)
(72) Inventeur: CAUX, Valentin, 77550 MOISSY CRAMAYEL (FR); ANTILLON, Teresa Del Carmen, 77550 MOISSY CRAMAYEL (FR); JALMAR, Marguerite, 77550 MOISSY CRAMAYEL (FR); CHAVARRIA, Daniel, 77550 MOISSY CRAMAYEL (FR)
(74) Mandataire: Casalonga
(86) Numéro de dépôt international: PCT/EP2020/073076
(87) Numéro de publication internationale: WO 2021/032726

(56) Documents cités:
- EP-A1- 2 783 985
- EP-A1- 3 127 811
- WO-A1-2009/073244
- WO-A1-2013/063599
- WO-A1-2019/070194
- US-A1- 2019 233 116

## Description

### Domaine technique de l'invention

La présente invention concerne le domaine de l'agencement de sièges, et notamment l'agencement de sièges inclinables adaptés pour les voyages de longues distances.

En particulier, l'invention concerne l'agencement de sièges d'un aéronef, par exemple destinés à la classe dite « affaires » ou « business » en termes anglo-saxons.

On notera que l'agencement des sièges pourrait également être destiné à d'autres moyens de transport, tels que par exemple les transports ferroviaires, ou encore les espaces restreints.

### Etat de la technique antérieur

Classiquement, les sièges sont mobiles entre une position assise, dans laquelle le dossier est incliné par rapport à l'assise et une position allongée, dans laquelle le dossier et l'assise sont sensiblement dans le même plan. Une position intermédiaire peut également être prévue.

Toutefois, de tels sièges sont particulièrement encombrants et réduisent considérablement l'espace disponible pour les passagers.

On peut se référer à cet égard au document EP 3 127 811 (Optimares) un ensemble de sièges inclinables pour avion, chaque siège étant incliné par rapport au siège adjacent de sorte que lorsque les deux sièges sont en position allongée, un espace entre eux subsiste afin que le passager puisse accéder au siège à proximité de la fenêtre sans dérange le passager situé sur le siège à proximité du couloir.

Toutefois, un tel espace est très petit et ne permet pas d'accéder au siège fenêtre de manière confortable.

Le document US 2019/233116 A1 divulgue un agencement de sièges d'avion dans une cabine d'avion ayant un axe longitudinal, deux parois latérales pourvues de hublots et une allée centrale, cet agencement comprenant au moins deux paires de sièges disposés l'un en regard de l'autre le long d'un axe parallèle à l'axe longitudinal de la cabine, dans chaque paire de sièges, un siège hublot étant adjacent à une paroi latérale pourvue de hublots et l'autre siège couloir étant adjacent à l'allée centrale. Chaque siège est configuré pour effectuer un mouvement d'inclinaison le long d'un axe d'inclinaison respectif entre une position assise et une position étendue, dans laquelle, dans cette position étendue, chaque siège a une extension maximale définie par deux points situés sur l'axe d'inclinaison. Chaque siège hublot est orienté selon un premier angle obtenu à partir de l'intersection de l'axe d'inclinaison respectif avec une ligne droite parallèle à l'axe longitudinal de la cabine au premier point d'extension maximale du siège hublot.

Il existe un besoin d'améliorer davantage le confort des utilisateurs, sans augmenter l'encombrement d'une rangée de sièges.

### Exposé de l'invention

La présente invention a donc pour but de palier les inconvénients des agencements précités et de proposer un agencement de sièges, notamment pour aéronef répondant à un besoin de confort des passagers.

L'invention a donc pour objet un agencement de sièges selon la revendication 1, notamment pour aéronef, comprenant au moins deux rangées comprenant chacune un premier et un deuxième siège orientés dans la même direction et comprenant chacun une assise et un dossier couplé à l'assise et mobile par rapport à l'assise entre une position inclinée dans laquelle le dossier est incliné par rapport à l'assise et une position allongée dans laquelle le dossier est sensiblement dans le même plan que l'assise. Les rangées de sièges s'étendent selon un axe parallèle à un axe longitudinal. Les deux sièges d'une même rangée sont alignés et disposés côtes à côtes sur un même axe.

Dans la même position, les sièges d'une même rangée ne s'étendent pas au-delà l'un par rapport à l'autre.

Dans la position allongée, chaque siège peut avoir une longueur comprise entre 175cm et 205cm, par exemple entre 177.8cm et 203.2cm.

Le premier siège s'étend selon un premier axe dirigé selon une première direction, notamment vers l'extérieur, et incliné selon un premier angle avec l'axe parallèle à un axe longitudinal.

Le deuxième siège s'étend selon un deuxième axe dirigé selon une deuxième direction, notamment vers l'intérieur, opposée à la première direction par rapport à l'axe parallèle à l'axe longitudinal et incliné selon un deuxième angle avec l'axe parallèle à l'axe longitudinal.

L'agencement comprenant une coque délimitant un premier logement de réception dudit premier siège et un deuxième logement de réception du deuxième siège adjacent audit premier logement et situé sur le même axe que le premier logement, le deuxième logement étant séparé dudit premier logement par une paroi de séparation s'étendant selon un axe incliné par rapport à l'axe parallèle à l'axe longitudinal.

La coque comprend une partie amont reliée à l'amont de la paroi de séparation centrale et une partie arrière reliée à l'arrière de la paroi de séparation centrale, chaque partie amont étant disposée en amont du deuxième siège de la rangée correspondante tout en laissant subsister avec ledit siège, un premier passage pour accéder audit deuxième siège.

La partie amont d'une coque d'une rangée arrière délimite avec la coque d'une rangée amont un deuxième passage pour accéder au premier siège de la rangée arrière.

Ainsi, l'agencement de sièges permet un accès aisé au siège fenêtre depuis le couloir, tout en garantissant une intimité des passagers et un espace pour les passagers le plus grand possible.

L'angle formé entre la paroi de séparation et l'axe longitudinal est compris entre 2° et 10°, par exemple égal à 5°.

Par exemple, la valeur absolue de l'angle d'inclinaison du premier siège par rapport à l'axe longitudinal est comprise entre 5° et 15°, par exemple comprise entre 5° et 10°, par exemple égale à 10°.

Avantageusement, le premier siège est incliné d'un angle négatif avec l'axe de la paroi de séparation.

Par exemple, la valeur absolue de l'angle d'inclinaison du premier siège avec l'axe de la paroi de séparation est comprise entre 0° et 20°, par exemple entre 5° et 15°, par exemple égal à 10°.

La paroi de séparation peut comprendre une cloison centrale de séparation mobile en translation dans ladite paroi selon l'axe de ladite paroi entre une position rétractée, dans laquelle la cloison est rétractée dans la paroi pour laisser libre une ouverture entre les deux logements d'une même rangée et une position fermée, dans laquelle la cloison obstrue l'ouverture, afin de conférer une intimité entre les passagers.

Selon un mode de réalisation, l'agencement de sièges comprend au moins deux rangées d'au moins un premier siège, les premiers sièges étant orientés dans la même direction.

Avantageusement, la coque d'une rangée amont comprend une cavité de réception d'un organe de retenue des membres inférieurs, par exemple une tablette, du passager du siège de la rangée arrière.

En variante, on pourrait prévoir un nombre différent de rangées de sièges.

Par exemple, l'angle d'inclinaison du deuxième siège par rapport à l'axe longitudinal est compris entre 5° et 25°, par exemple compris entre 10° et 20°, par exemple égal à 15°.

Avantageusement, le deuxième siège est incliné d'un angle positif avec l'axe de la paroi de séparation.

Par exemple, l'angle d'inclinaison du deuxième siège par rapport à l'axe de la paroi de séparation est compris entre 0° et 20°, par exemple entre 5° et 15°, par exemple égal à 10°.

Avantageusement, la coque comprend une partie amont reliée à l'amont de la paroi centrale et une partie arrière reliée à l'arrière de la paroi centrale, chaque partie amont étant disposée en amont du deuxième siège de la rangée correspondante tout en laissant subsister avec ledit siège, un premier passage pour accéder audit siège, par exemple directement depuis un couloir. Le premier passage a, par exemple, une largeur comprise entre 35 cm et 65cm, par exemple entre 38.1cm et 63.5cm.

Par exemple, la partie amont d'une coque d'une rangée arrière délimite avec la coque d'une rangée amont un deuxième passage pour accéder au premier siège de la rangée arrière directement depuis un couloir. Ainsi, il est possible d'accéder directement au siège fenêtre depuis le couloir central par un couloir dédié. Le deuxième passage a une largeur comprise entre 20cm et 25cm, par exemple égale à 22.86 cm. On pourrait prévoir que le deuxième passage soit fermé par une cloison mobile, tel que par exemple une porte, par exemple montée dans la coque.

La partie amont de la coque peut comprendre une cavité de réception d'un organe de retenue des membres inférieurs, par exemple une tablette.

La partie arrière d'une rangée amont peut comprendre une cavité de réception d'un organe de retenue des membres inférieurs, par exemple une tablette, du passager du premier siège de la rangée arrière. En d'autres termes, la cavité de la coque de la rangée amont est ouverte vers la rangée arrière.

Les organes de retenue des membres inférieurs sont distincts du siège et destiné à supporter les pieds d'un passager dans la position allongée. L'organe de retenue présente, par exemple, une longueur comprise entre 50cm et 105cm, par exemple entre 50.8cm et 101.6cm et une hauteur comprise entre 25cm et 55cm, par exemple entre 25.4cm et 50.8cm.

Avantageusement, l'agencement comprend au moins un accoudoir fixé sur la coque et un plateau mobile fixé sur l'accoudoir correspondant et mobile entre une position rangée dans laquelle le plateau est à l'intérieur de l'accoudoir et une position déployée dans laquelle le plateau s'étend dans un plan sensiblement horizontal à l'avant du siège correspondant.

Selon un autre aspect, l'invention concerne un aéronef , selon la revendication 11, s'étendant selon un axe longitudinal comprenant un agencement de sièges selon le premier aspect tel que définit précédemment.

### Brève description des dessins

D'autres buts, caractéristiques et avantages de l'invention apparaîtront à la lecture de la description suivante, donnée uniquement à titre d'exemple non limitatif, et faite en référence aux dessins indexés sur lesquels :
[Fig 1] illustre schématiquement une vue de dessus d'un agencement de sièges notamment d'un aéronef selon un mode de réalisation de l'invention ;
[Fig 2] est une vue en perspective de l'agencement de sièges selon la figure 1,
[Fig 3a]

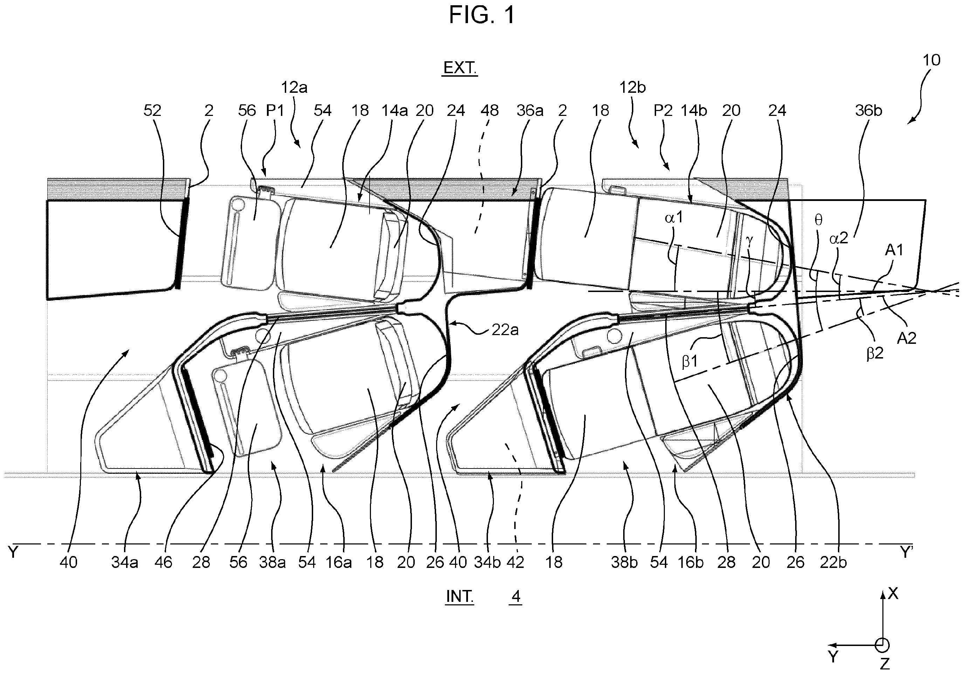

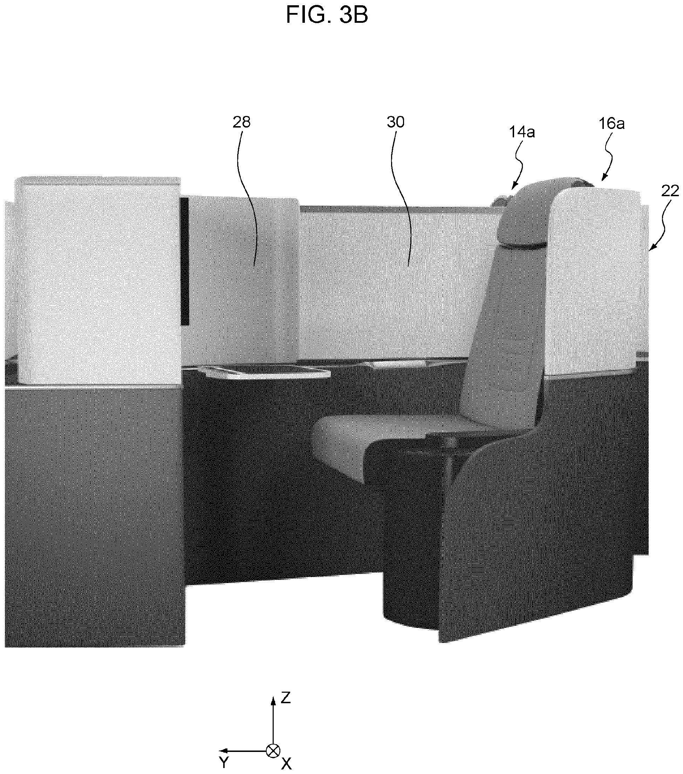

[Fig 3b] sont des vues de côté en perspective de l'agencement de sièges selon la figure 1, illustrant respectivement une position rétractée de la cloison centrale et une position fermée de ladite cloison centrale ; et

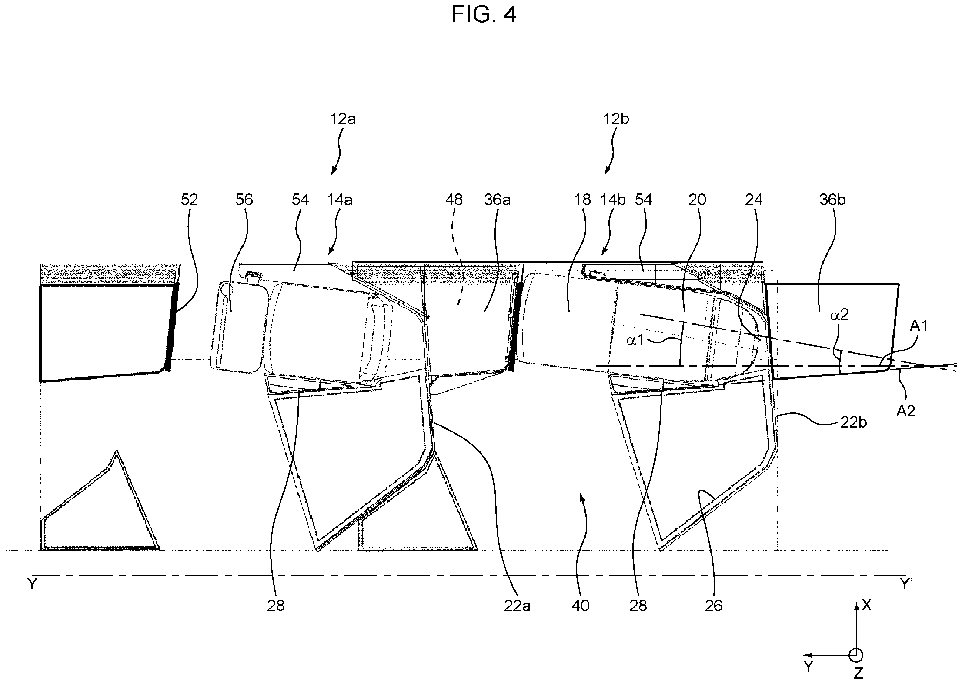

[Fig 4] illustre schématiquement une vue de dessus d'un agencement de sièges notamment d'un aéronef selon un exemple non revendiqué.

Dans la suite de la description, les termes « amont » et « aval » sont définis par rapport au sens de déplacement de l'aéronef. Les termes « intérieur » et « extérieur » sont définis par rapport à une cloison extérieure de l'aéronef, l'intérieur étant plus proche du centre de l'aéronef que l'extérieur.

Dans la suite de la description, on considère une base orthonormée X, Y, Z, avec Z correspondant à un axe d'élévation représentant la direction verticale, X la direction transversale de l'intérieur vers l'extérieur de l'aéronef, perpendiculaire à l'axe vertical Z et Y, la direction longitudinale de l'avant vers l'arrière de l'aéronef, perpendiculaire aux axes X et Z.

### Exposé détaillé d'au moins un mode de réalisation

Sur la figure 1 est représenté un agencement 10 de sièges notamment pour un aéronef.

L'agencement de sièges comprend deux rangées 12a, 12b de sièges adjacents 14a, 16a, 14b, 16b, à savoir un siège dit « fenêtre » 14a, à proximité d'une fenêtre 2 et un siège dit « couloir » 16a, 16b à proximité d'un couloir 4 s'étendant selon un axe longitudinal Y-Y'. Les rangées 12a, 12b s'étendent selon un axe parallèle à l'axe longitudinal Y-Y'. Les sièges 14a, 16a et 14b, 16b d'une même rangée 12a ou 12b sont alignés et disposés côtes à côtes sur le même axe parallèle à l'axe transversal X.

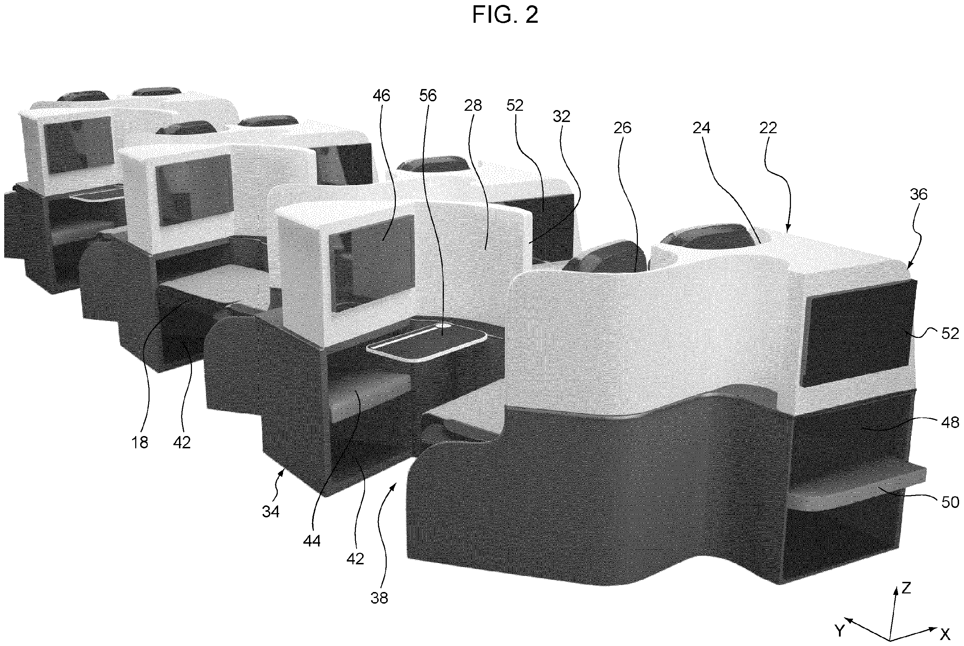

En variante, on pourrait prévoir un nombre différent de rangées de sièges, tel que visible par exemple sur la figure 2.

Tel qu'illustré, tous les sièges sont dirigés dans une même direction, ici vers l'avant de l'aéronef.

Chaque siège 14a, 16a, 14b, 16b comprend une assise 18 et un dossier 20 couplé à l'assise 18 et mobile par rapport à l'assise entre une position P1 inclinée dans laquelle le dossier est incliné par rapport à l'assise et une position P2 allongée dans laquelle le dossier est sensiblement dans le même plan que l'assise.

Dans la position P2 allongée, chaque siège peut avoir une longueur comprise entre 175cm et 205cm, par exemple entre 177.8cm et 203.2cm.

Chaque siège fenêtre 14a, 14b s'étend selon un axe dirigé vers l'extérieur et formant un angle α1 négatif avec un axe A1 parallèle à l'axe longitudinal Y-Y'. Par exemple, la valeur absolue de l'angle α1 est comprise entre 0° et 20°.

Chaque siège couloir 16a, 16b s'étend selon un axe dirigé vers l'intérieur et formant un angle β1 positif avec l'axe A1 parallèle à l'axe longitudinal Y-Y'. Par exemple, l'angle β1 est compris entre 0° et 20°.

On entend par « angle positif », lorsque la rotation est anti-horaire et par « angle négatif », lorsque la rotation est horaire.

Le siège fenêtre 14a, 14b forme avec le siège couloir 16a, 16b de la même rangée un angle θ. Par exemple, l'angle θ est compris entre 0° et 40°.

Tel qu'illustré, l'agencement de sièges 10 comprend une coque 22a, 22b dans laquelle sont disposés une paire de sièges, à savoir un siège fenêtre et un siège couloir. Chaque coque est, par exemple, réalisée en matériau composite, par exemple en fibre de verre.

Chaque coque 22a, 22b comprend un premier logement 24 délimitant un espace de réception du siège fenêtre 14a, 14b et un deuxième logement 26 délimitant un espace de réception du siège couloir 16a, 16b.

Les logements 24, 26 sont séparés par une paroi de séparation 28 centrale. La paroi de séparation 28 s'étend selon un axe A2 formant un angle γ avec l'axe A1 parallèle à l'axe longitudinal. Par exemple, l'angle γ est compris entre 2° et 10°, par exemple égal à 5°.

L'inclinaison de la paroi de séparation 28 permet de procurer un espace plus important pour les passagers.

L'axe d'extension de chaque siège fenêtre 14a, 14b forme un angle négatif α2 avec l'axe A2 de la paroi de séparation. Par exemple, la valeur absolue de l'angle α2 est comprise entre 0° et 20°, par exemple entre 5° et 15°, par exemple égal à 10°.

L'axe d'extension de chaque siège couloir 16a, 16b forme un angle positif β2 avec l'axe A2 de la paroi de séparation. Par exemple, l'angle β2 est compris entre 0° et 20°, par exemple entre 5° et 15°, par exemple égal à 10°.

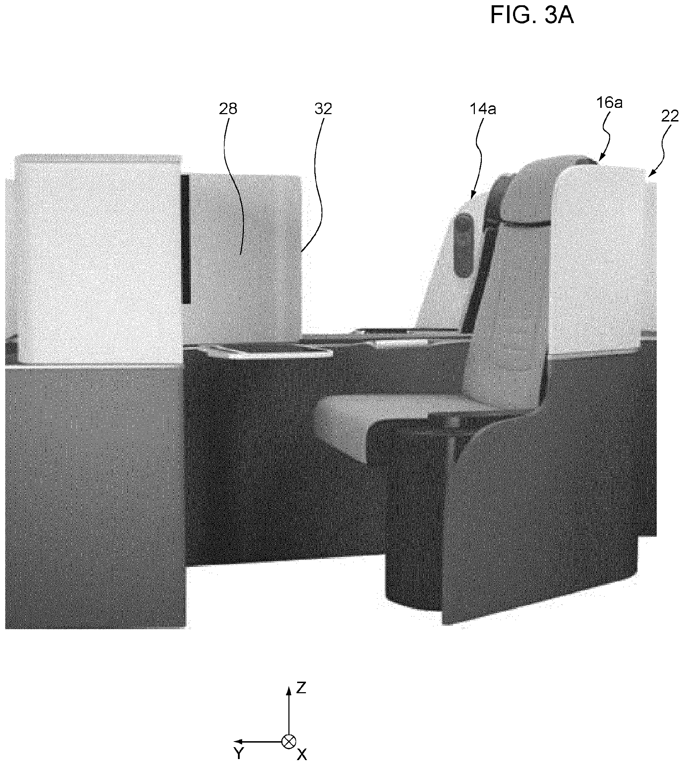

La paroi de séparation 28 comprend une cloison centrale de séparation 30 mobile en translation dans ladite paroi 28 selon l'axe A2 entre une position rétractée, visible sur la figure 3A, dans laquelle la cloison 30 est rétractée dans la paroi 28 pour laisser libre une ouverture 32 entre les deux sièges d'une même rangée et une position fermée, visible sur la figure 3B, dans laquelle la cloison 28 obstrue l'ouverture 32, afin de conférer une intimité entre les passagers.

Chaque coque 22a, 22b comprend en outre une partie amont 34a, 34b reliée à l'amont de la paroi centrale 28 et une partie arrière 36a, 36b reliée à l'arrière de la paroi centrale 28.

Chaque partie amont 34a, 34b est disposée en amont du siège couloir 16a, 16b tout en laissant subsister avec ledit siège couloir 16a, 16b, un premier passage 38 pour accéder au siège couloir directement depuis le couloir 4. Le premier passage 38 a une largeur comprise entre 35 cm et 65cm, par exemple entre 38.1cm et 63.5cm.

La partie amont 34b d'une coque 22b d'une rangée 12b de sièges délimite avec la coque 22a d'une rangée 12a de sièges amont un deuxième passage 40 pour accéder au siège fenêtre directement depuis le couloir 4. Ainsi, il est possible d'accéder directement au siège fenêtre depuis le couloir central 4 par un couloir dédié 40. Le deuxième passage 40 a une largeur comprise entre 20cm et 25cm, par exemple égale à 22.86 cm. On pourrait prévoir que le deuxième passage 40 soit fermé par une cloison mobile, tel que par exemple une porte, par exemple montée dans la coque 22.

Chaque partie amont 34a, 34b comprend une cavité 42, visible sur la figure 2, de réception d'un organe 44 de retenue des membres inférieurs, par exemple une tablette.

L'organe 44 est distinct du siège et destiné à supporter les pieds d'un passager dans la position allongée. L'organe 44 présente par exemple une longueur comprise entre 50cm et 105cm, par exemple entre 50.8cm et 101.6cm et une hauteur comprise entre 25cm et 55cm, par exemple entre 25.4cm et 50.8cm.

Chaque partie amont 34a, 34b comprend en outre un organe d'affichage 46, par exemple un écran, pour le siège couloir 16a, 16b correspondant fixée sur la face arrière de ladite partie amont. L'organe d'affichage 46 a par exemple une longueur diagonale comprise entre 40cm et 70cm, par exemple entre 45.72cm et 60.96 cm.

Chaque partie arrière 36a est disposée en arrière du siège fenêtre 14a de la rangée correspondante 12a et débouche dans le deuxième passage 40 pour l'accès au siège fenêtre 14b de la rangée adjacente 12b. Chaque partie arrière 36a, 36b comprend une cavité 48, visible sur la figure 2, de réception d'un organe 50 de retenue des membres inférieurs, par exemple une tablette, du passager du siège fenêtre de la rangée derrière. En d'autres termes, la cavité 48 de la coque de la rangée amont 12a est ouverte vers la rangée arrière 12b.

L'organe 50 est distinct du siège et destiné à supporter les pieds d'un passager dans la position allongée et présente par exemple une longueur comprise entre 50cm et 105cm, par exemple entre 50.8cm et 101.6cm et une hauteur comprise entre 25cm et 55cm, par exemple entre 25.4cm et 50.8cm.

Chaque partie arrière 36a, 36b comprend en outre un organe d'affichage 52, par exemple un écran, pour le siège fenêtre de la rangée derrière fixée sur la face arrière de ladite partie arrière. L'organe d'affichage 52 a par exemple une longueur diagonale comprise entre 40cm et 70cm, par exemple entre 45.72cm et 60.96 cm.

L'agencement de sièges comprend un premier accoudoir 54 disposé à droite de chaque siège. Ledit accoudoir 54 est fixé sur la coque correspondante 22. L'accoudoir présente une hauteur comprise entre 35cm et 80cm, par exemple entre 38.1cm et 76.2cm.

L'agencement de sièges comprend en outre un plateau mobile 56, fixé sur l'accoudoir 54 correspondant et mobile entre une position rangée dans laquelle le plateau est à l'intérieur de l'accoudoir et une position déployée dans laquelle le plateau s'étend dans un plan sensiblement horizontal à l'avant du siège correspondant. La position déployée est visible sur la figure 1 dans la position P1 du siège.

La surface du plateau 56 est comprise entre 1000cm² et 2000cm², par exemple égale à 1400cm².

On pourrait également prévoir une tablette fixe (non représentée) fixée sur la coque sous l'organe d'affichage.

L'agencement de sièges comprend également un deuxième accoudoir (non référencé) disposé à gauche de chaque siège. On pourrait prévoir que le plateau 56 du siège fenêtre 14a, 14b soit fixé sur ledit deuxième accoudoir.

L'exemple non revendiqué illustré sur la figure 4, dans lequel les mêmes éléments portent les mêmes références, diffère du mode de réalisation illustré sur les figures 1 à 3 uniquement par le fait que chaque rangée 12a, 12b ne comprend qu'un unique siège fenêtre 14a, 14b. Le logement 26 de la coque 22 est dépourvu de siège couloir, ce qui permet d'agrandir le passage 40 au siège fenêtre et d'utiliser le logement 26, par exemple comme espace de jeux pour les enfants.

Dans un autre exemple non revendiqué et non représenté, on pourrait supprimer la paroi de séparation entre deux sièges adjacents d'une même rangée de sièges, tout en maintenant un angle d'inclinaison α1 du premier siège par rapport à l'axe longitudinal Y-Y' compris entre 0° et 20°, par exemple compris entre 5° et 15°, par exemple égal à 10°, un angle d'inclinaison β1 du deuxième siège par rapport à l'axe longitudinal Y-Y' compris entre 0° et 20°, par exemple compris entre 5° et 15°, par exemple égal à 10° et un angle θ entre le premier et le deuxième siège d'une même rangée compris entre 0° et 40°, par exemple compris entre 10° et 30°, par exemple égal à 20°.

Grâce à l'invention, l'agencement de sièges permet un accès aisé au siège fenêtre depuis le couloir, tout en garantissant une intimité des passagers et un espace pour les passagers le plus grand possible.

## Revendications

1. Agencement de sièges, notamment pour aéronef, comprenant au moins deux rangées (12a, 12b) comprenant chacune un premier et un deuxième sièges (14a, 14b, 16a, 16b) orientés dans la même direction et comprenant chacun une assise (18) et un dossier (20) couplé à l'assise (18) et mobile par rapport à l'assise entre une position (P1) inclinée dans laquelle le dossier est incliné par rapport à l'assise et une position (P2) allongée dans laquelle le dossier est sensiblement dans le même plan que l'assise, les rangées (12a, 12b) s'étendant selon un axe (A1) configuré pour être parallèle à un axe longitudinal (Y-Y') de l'aéronef, et les deux sièges d'une même rangée étant alignés et disposés côtes à côtes sur un même axe transversal perpendiculaire à l'axe (A1) parallèle à l'axe longitudinal (Y-Y'),
- le premier siège (14a, 14b) s'étendant selon un premier axe dirigé selon une première direction, notamment vers l'extérieur, et incliné selon un premier angle (α1) par rapport à l' axe (A1) parallèle à l' axe longitudinal (Y-Y'), et
- le deuxième siège (16a, 16b) s'étendant selon un deuxième axe dirigé selon une deuxième direction, notamment vers l'intérieur, opposée à la première direction par rapport à l'axe (A1) parallèle à l'axe longitudinal et incliné selon un deuxième angle (β1) avec l'axe (A1) parallèle à l'axe longitudinal (Y-Y'), chaque rangée comprenant une coque (22a, 22b) délimitant un premier logement (24) de réception dudit premier siège (14a, 14b) et un deuxième logement (26) de réception du deuxième siège (16a, 16b) adjacent audit premier logement et situé sur le même axe que le premier logement, le deuxième logement (26) étant séparé axialement dudit premier logement (24) par une paroi de séparation (28) s'étendant selon un axe (A2) incliné par rapport à l'axe (A1) parallèle à l'axe longitudinal (Y-Y'), la coque (22a, 22b) comprenant une partie amont (34a, 34b) reliée à l'amont de la paroi de séparation centrale (28) et une partie arrière (36a, 36b) reliée à l'arrière de la paroi de séparation centrale (28), chaque partie amont (34a, 34b) étant disposée en amont du deuxième siège (16a) de la rangée (12a) correspondante tout en laissant subsister avec ledit siège, un premier passage (38) pour accéder audit deuxième siège (16a) et la partie amont (34b) d'une coque (22b) d'une rangée arrière (12b) délimitant avec la coque (22a) d'une rangée (12a) amont un deuxième passage (40) pour accéder au premier siège (14b) de la rangée arrière (12b).

2. Agencement de sièges selon la revendication 1, dans lequel l'angle (y) formé entre la paroi de séparation (28) et l'axe (A1) parallèle à l'axe longitudinal (Y-Y') est compris entre 2° et 10°, par exemple égal à 5°.

3. Agencement de sièges selon l'une quelconque des revendications précédentes, dans lequel le premier siège (14a, 14b) est incliné d'un angle négatif (α2) avec l'axe (A2) de la paroi de séparation (28).

4. Agencement de sièges selon la revendication 3, dans lequel la valeur absolue de l'angle d'inclinaison (α2) du premier siège (14a, 14b) avec l'axe (A2) de la paroi de séparation (28) est comprise entre 0° et 20°, par exemple entre 5° et 15°, par exemple égal à 10°.

5. Agencement de sièges selon l'une quelconque des revendications précédentes, dans lequel la paroi de séparation (28) comprend une cloison centrale de séparation (30) mobile en translation dans ladite paroi (28) selon l'axe (A2) de ladite paroi entre une position rétractée, dans laquelle la cloison (30) est rétractée dans la paroi (28) pour laisser libre une ouverture (32) entre les deux logements (24, 26) d'une même rangée et une position fermée, dans laquelle la cloison (30) obstrue l'ouverture (32).

6. Agencement de sièges selon l'une quelconque des revendications 1 à 5, dans lequel le deuxième siège (16a, 16b) est incliné d'un angle positif (β2) avec l'axe (A2) de la paroi de séparation (28), opposé à l'angle d'inclinaison du premier siège (14a, 14b) par rapport à l'axe (A2) de la paroi de séparation.

7. Agencement de sièges selon la revendication 6, dans lequel l'angle d'inclinaison (β2) du deuxième siège (16a, 16b) avec l'axe (A2) de la paroi de séparation (28) est compris entre 0° et 20°, par exemple entre 5° et 15°, par exemple égal à 10°.

8. Agencement de sièges selon l'une quelconque des revendications précédentes, dans lequel la partie amont (34a, 34b) de la coque (22a, 22b) comprend une cavité (42) de réception d'un organe (44) de retenue des membres inférieurs.

9. Agencement de sièges selon l'une quelconques des revendications précédentes, dans lequel la partie arrière (36a) d'une rangée amont (12a) comprend une cavité (48) de réception d'un organe (50) de retenue des membres inférieurs du passager du premier siège (14b) de la rangée arrière (12b).

10. Agencement de sièges selon l'une quelconque des revendications précédentes, comprenant au moins un accoudoir (54) fixé sur la coque (22a, 22b) et un plateau mobile (56) fixé sur l'accoudoir correspondant et mobile entre une position rangée dans laquelle le plateau est à l'intérieur de l'accoudoir et une position déployée dans laquelle le plateau s'étend dans un plan sensiblement horizontal à l'avant du siège correspondant

11. Aéronef s'étendant selon un axe longitudinal (Y-Y') comprenant un agencement de sièges selon la revendication 1.

## Patentansprüche

1. Sitzanordnung, insbesondere für Flugzeuge, umfassend mindestens zwei Reihen (12a, 12b), die jeweils einen ersten und einen zweiten Sitz (14a, 14b, 16a, 16b) umfassen, die in die gleiche Richtung ausgerichtet sind und jeweils eine Sitzfläche (18) und eine Rückenlehne (20), die mit der Sitzfläche (18) gekoppelt und in Bezug auf die Sitzfläche zwischen einer geneigten Position (P1), in der die Rückenlehne in Bezug auf die Sitzfläche geneigt ist, und einer liegenden Position (P2), in der sich die Rückenlehne im Wesentlichen in derselben Ebene wie die Sitzfläche befindet, beweglich ist, umfasst, wobei sich die Reihen (12a, 12b) entlang einer Achse (A1) erstrecken, die dazu konfiguriert ist, parallel zu einer Längsachse (Y-Y`) des Flugzeugs zu liegen, und die beiden Sitze derselben Reihe nebeneinander auf einer einzigen Querachse ausgerichtet und angeordnet sind, die senkrecht zur Achse (A1) verläuft, die parallel zur Längsachse (Y-Y`) liegt,
- wobei der erste Sitz (14a, 14b) sich entlang einer ersten Achse erstreckt, die in eine erste Richtung, insbesondere nach außen, gerichtet ist, und in Bezug auf die Achse (A1), die parallel zur Längsachse (Y-Y`) liegt, in einem ersten Winkel (αl) geneigt ist, und
- wobei der zweite Sitz (16a, 16b) sich entlang einer zweiten Achse erstreckt, die in eine zweite Richtung, insbesondere nach innen, entgegengesetzt zur ersten Richtung in Bezug auf die Achse (A1), die parallel zur Längsachse liegt, gerichtet ist und in einem zweiten Winkel (β1) geneigt ist, wobei die Achse (A1) parallel zur Längsachse (Y-Y`) liegt,
- wobei jede Reihe eine Schale (22a, 22b) umfasst, die ein erstes Gehäuse (24) zur Aufnahme des ersten Sitzes (14a, 14b) und ein zweites Gehäuse (26) zur Aufnahme des zweiten Sitzes (16a, 16b), das an das erste Gehäuse angrenzt und sich auf der gleichen Achse wie das erste Gehäuse befindet, definiert, wobei das zweite Gehäuse (26) axial vom ersten Gehäuse (24) durch eine Trennwand (28) getrennt ist, die sich entlang einer Achse (A2) erstreckt, die in Bezug auf die Achse (A1), die parallel zur Längsachse (Y-Y`) liegt, geneigt ist, wobei die Schale (22a, 22b) einen vorderen Teil (34a, 34b), der mit der Vorderseite der zentralen Trennwand (28) verbunden ist, und einen hinteren Teil (36a, 36b) umfasst, der mit der Rückseite der zentralen Trennwand (28) verbunden ist, wobei jeder vordere Teil (34a, 34b) vor dem zweiten Sitz (16a) der entsprechenden Reihe (12a) angeordnet ist, wobei dem Sitz ein erster Durchgang (38) bestehen bleibt, um zum zweiten Sitz (16a) zu gelangen, und der vordere Teil (34b) einer Schale (22b) einer hinteren Reihe (12b) mit der Schale (22a) einer vorderen Reihe (12a) einen zweiten Durchgang (40) definiert, um zum ersten Sitz (14b) der hinteren Reihe (12b) zu gelangen.

2. Sitzanordnung nach Anspruch 1, wobei der Winkel (γ), der zwischen der Trennwand (28) und der Achse (A1), die parallel zur Längsachse (Y-Y`) liegt, gebildet wird, zwischen 2° und 10° beträgt, zum Beispiel gleich 5° ist.

3. Sitzanordnung nach einem der vorhergehenden Ansprüche, wobei der erste Sitz (14a, 14b) mit der Achse (A2) der Trennwand (28) in einem negativen Winkel (α2) geneigt ist.

4. Sitzanordnung nach Anspruch 3, wobei der Absolutwert des Neigungswinkels (α2) des ersten Sitzes (14a, 14b) mit der Achse (A2) der Trennwand (28) zwischen 0° und 20° liegt, zum Beispiel zwischen 5° und 15°, zum Beispiel gleich 10° ist.

5. Sitzanordnung nach einem der vorhergehenden Ansprüche, wobei die Trennwand (28) eine zentrale Abtrennung (30) umfasst, die in der Wand (28) entlang der Achse (A2) der Wand zwischen einer zurückgezogenen Position, in der die Abtrennung (30) in die Wand (28) zurückgezogen wird, um eine Öffnung (32) zwischen den beiden Gehäusen (24, 26) derselben Reihe freizulassen, und einer geschlossenen Position, in der die Abtrennung(30) die Öffnung (32) versperrt, verschiebbar ist.

6. Sitzanordnung nach einem der Ansprüche 1 bis 5, wobei der zweite Sitz (16a, 16b) in einem positiven Winkel (β2) mit der Achse (A2) der Trennwand (28) geneigt ist, der dem Neigungswinkel des ersten Sitzes (14a, 14b) in Bezug auf die Achse (A2) der Trennwand entgegengesetzt ist.

7. Sitzanordnung nach Anspruch 6, wobei der Neigungswinkel (β2) des zweiten Sitzes (16a, 16b) mit der Achse (A2) der Trennwand (28) zwischen 0° und 20° beträgt, zum Beispiel zwischen 5° und 15°, zum Beispiel gleich 10° ist.

8. Sitzanordnung nach einem der vorhergehenden Ansprüche, wobei der vordere Teil (34a, 34b) der Schale (22a, 22b) einen Hohlraum (42) zur Aufnahme eines Rückhalteelements (44) für die Beine umfasst.

9. Sitzanordnung nach einem der vorhergehenden Ansprüche, wobei der hintere Teil (36a) einer vorderen Reihe (12a) einen Hohlraum (48) zur Aufnahme eines Rückhalteelements (50) für die Beine des Passagiers auf dem ersten Sitz (14b) der hinteren Reihe (12b) umfasst.

10. Sitzanordnung nach einem der vorhergehenden Ansprüche, umfassend mindestens eine Armlehne (54), die an der Schale (22a, 22b) befestigt ist, und eine bewegliche Tischplatte (56), die an der entsprechenden Armlehne befestigt und zwischen einer verstauten Position, in der sich die Tischplatte im Inneren der Armlehne befindet, und einer ausgezogenen Position, in der sich die Tischplatte in einer im Wesentlichen horizontalen Ebene an der Vorderseite des entsprechenden Sitzes erstreckt, beweglich ist.

11. Flugzeug, das sich entlang einer Längsachse (Y-Y`) erstreckt und eine Sitzanordnung nach Anspruch 1 umfasst.

## Claims

1. A seat arrangement, in particular for aircraft, comprising at least two rows (12a, 12b) each comprising a first and a second seat (14a, 14b, 16a, 16b) oriented in the same direction and each comprising a seat portion (18) and a backrest (20) coupled to the seat portion (18) and movable relative to the seat portion between an inclined position (P1) wherein the backrest is inclined relative to the seat portion and an extended position (P2) wherein the backrest is substantially in the same plane as the seat portion, the rows (12a, 12b) extending along an axis (Al) configured to be parallel to a longitudinal axis (Y-Y') of the aircraft, the two seats of the same row being aligned and disposed side by side on the same transverse axis perpendicular to the axis (Al) parallel to the longitudinal axis (Y-Y'),
- the first seat (14a, 14b) extending along a first axis directed in a first direction, in particular towards the outside, and inclined at a first angle (αl) relative to the axis (Al) parallel to the longitudinal axis (Y-Y'), and
- the second seat (16a, 16b) extending along a second axis directed in a second direction, in particular towards the inside, opposite the first direction relative to the axis (Al) parallel to the longitudinal axis and inclined at a second angle (β1) with the axis (Al) parallel to the longitudinal axis (Y-Y'), each row comprising a shell (22a, 22b) delimiting a first housing (24) for receiving said first seat (14a, 14b) and a second housing (26) for receiving the second seat (16a, 16b) adjacent to said first housing and located on the same axis as the first housing, the second housing (26) being separated axially from said first housing (24) by a separation wall (28) extending along an axis (A2) inclined relative to the axis (Al) parallel to the longitudinal axis (Y-Y'), the shell (22a, 22b) comprising an upstream part (34a, 34b) connected to the upstream of the central separation wall (28) and a rear part (36a, 36b) connected to the rear of the central separation wall (28), each upstream part (34a, 34b) being disposed upstream of the second seat (16a) of the corresponding row (12a) while leaving a first passage (38) with said seat to access said second seat (16a) and the upstream part (34b) of a shell (22b) of a rear row (12b) delimiting with the shell (22a) of an upstream row (12a) a second passage (40) to access the first seat (14b) of the rear row (12b).

2. The seat arrangement according to claim 1, wherein the angle (γ) formed between the separation wall (28) and the axis (Al) parallel to the longitudinal axis (Y-Y') is comprised between 2° and 10°, for example equal to 5°.

3. The seat arrangement according to any one of the preceding claims, wherein the first seat (14a, 14b) is inclined at a negative angle (α2) with the axis (A2) of the separation wall (28).

4. The seat arrangement according to claim 3, wherein the absolute value of the angle of inclination (α2) of the first seat (14a, 14b) with the axis (A2) of the separation wall (28) is comprised between 0° and 20°, for example between 5° and 15°, for example equal to 10°.

5. The seat arrangement according to any one of the preceding claims, wherein the separation wall (28) comprises a central separation partition (30) movable in translation in said wall (28) along the axis (A2) of said wall between a retracted position, wherein the partition (30) is retracted into the wall (28) to leave a free opening (32) between the two housings (24, 26) of the same row and a closed position, wherein the partition (30) obstructs the opening (32).

6. The seat arrangement according to any one of claims 1 to 5, wherein the second seat (16a, 16b) is inclined at a positive angle (β2) with the axis (A2) of the separation wall (28), opposite the angle of inclination of the first seat (14a, 14b) relative to the axis (A2) of the separation wall.

7. The seat arrangement according to claim 6, wherein the angle of inclination (β2) of the second seat (16a, 16b) with the axis (A2) of the separation wall (28) is comprised between 0° and 20°, for example between 5° and 15°, for example equal to 10°.

8. The seat arrangement according to any one of the preceding claims, wherein the upstream part (34a, 34b) of the shell (22a, 22b) comprises a cavity (42) for receiving a member (44) for retaining the legs.

9. The seat arrangement according to any one of the preceding claims, wherein the rear part (36a) of an upstream row (12a) comprises a cavity (48) for receiving a member (50) for retaining the legs of the passenger of the first seat (14b) of the rear row (12b).

10. The seat arrangement according to any one of the preceding claims, comprising at least one armrest (54) fixed on the shell (22a, 22b) and a movable plate (56) fixed on the corresponding armrest and movable between a stowed position wherein the tray is inside the armrest and a deployed position wherein the tray extends in a substantially horizontal plane at the front of the corresponding seat.

11. An aircraft extending along a longitudinal axis (Y-Y') comprising a seat arrangement according to claim 1.
